Europäisches Patentamt

European Patent Office

Office européen des brevets

(19)

(11) **EP 0 935 320 A1**

(12) **EUROPEAN PATENT APPLICATION**
published in accordance with Art. 158(3) EPC

(43) Date of publication:
**11.08.1999 Bulletin 1999/32**

(21) Application number: **98911143.0**

(22) Date of filing: **31.03.1998**

(51) Int. Cl.$^6$: **H01S 3/10**

(86) International application number:
**PCT/JP98/01488**

(87) International publication number:
**WO 98/44605 (08.10.1998 Gazette 1998/40)**

(84) Designated Contracting States:
**DE FR GB IT SE**

(30) Priority: **01.04.1997 JP 8304497**

(71) Applicant:
**The Furukawa Electric Co., Ltd.
Tokyo 100-8322 (JP)**

(72) Inventors:
• **TASHIRO, Yoshio,
The Furukawa Electric Co., Ltd.
Tokyo 100-0005 (JP)**

• **OGOSHI, Haruki,
The Furukawa Electric Co., Ltd.
Tokyo 100-0005 (JP)**

(74) Representative:
**Hillier, Peter et al
Reginald W. Barker & Co.,
Chancery House,
53-64, Chancery Lane
London, WC2A 1QU (GB)**

(54) **OPTICAL AMPLIFIER**

(57)      An optical circulator (4) is inserted at a portion of an optical amplifying fiber (2). Reflecting means (8) is provided to the optical circulator (4) so that wavelength-multiplexed light inputted to the optical amplifying fiber (2) is subject to selection of wavelength by the reflecting means (8), appropriately attenuated by the reflectance set for every wavelength to the reflecting means (8), amplified, and outputted from the optical amplifying fiber (2) as a signal light having no intensity variation between channels.

FIG. I

## Description

BACKGROUND OF THE INVENTION

Field of the Invention

This invention relates to optical amplifiers used for various optical fiber communication systems for amplifying optical signals, particularly wavelength multiplexed optical fiber communications.

Prior Art

Optical fiber communication systems use reproducing relays, which provide amplified optical signal by converting an input optical signal to an electric signal, then amplifying the electric signal and then converting the amplified electric signal back to the optical signal output. Up to date, however, there has been a rapid trend for replacing the reproducing relays with optical fiber amplifiers for directly amplifying optical signal, particularly erbium dope optical fiber amplifiers (hereinafter referred to as EDOFA). The EDOFA has been finding extensive applications, even to wavelength division multiplexed optical communication (hereinafter referred to as WDMOC) which is attracting attention as high capacity optical communication. In the WDMOC, a plurality of optical signals of different wavelengths are used to carry data, and the signals carrying the data are combined in a wavelength multiplexer to obtain as wavelength-multiplexed optical signal, which is transmitted via optical fiber. Thus, compared to the single optical signal optical communication, in the WDMOC the communication capacity per fiber can be extremely increased.

The EDOFA can collectively amplify the wavelength-multiplexed optical signal in the WDMOC, and is gaining increasing expectation as simplified linear relays replacing the conventional repeater in WDMOC systems. The EDOFA, however, has problems to be solved for its application to WDMOC systems. In the EDOFA erbium ions in erbium dope fiber (hereinafter referred to as EDF) are excited by passing exciting light of a predetermined wavelength through the EDF, thereby producing a state of electron inverted population in the EDF, and optical signal is passed through the EDF in this state to cause stimulated emission of light of the same frequency as the optical signal, thereby effecting amplification of thereof. However, the gain characteristics of the wavelengths (i.e., channels) of the EDOFA, involve inter-channel gain deviations, which are produced in dependence on the light absorption coefficient, the stimulated emission coefficient, electron inverted population state, etc., of the EDOFA, and may also be produced by changes in the electron inverted population state with changes in the light level of the input optical signal. Therefore, the optical signal provided tram the EDOFA may have level differences with different wavelengths. That is, the gain of the EDOFA is wavelength-dependent. Therefore, in the case of using a plurality of EDOFAs in a multiple-state connection as a linear relay, the inter-wavelength gain differences are accumulated to make the problem more significant and impose restrictions on the transfer characteristics of the system.

A method proposed for solving such a problem is to insert a compensation filter in the EDOFA for flattening the gain spectrum thereof. A typical example of this method is disclosed in Us patent 5,260,823. According to the disclosure of this patent, the filter inserted in the EDOFA is adapted to reduce a gain peak in the neighborhood of 1,530 nm, which is a featuring peak of the EDOFA, thus obtaining a flat gain spectrum over a wide bandwidth.

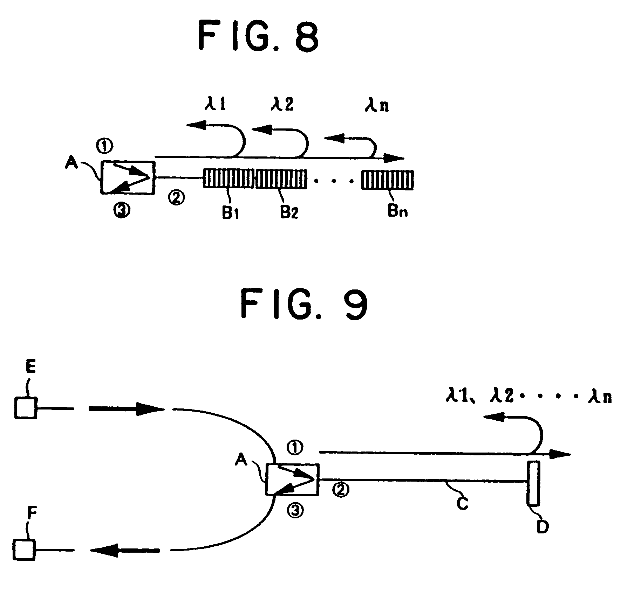

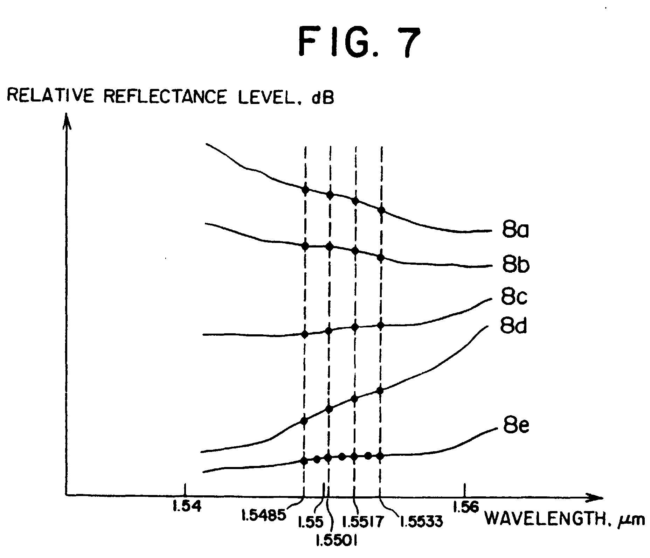

In the meantime, Japanese Patent Disclosure No. 7-336327 discloses a transmission filter by the combination of a fiber grating and a optical circulator as a compensation filter which is used for the purpose of precluding inter-wavelength level fluctuations of wavelength-multiplexed optical signal. Fig. 8 shows this filter. The illustrated filter comprises an optical circulator A having three, i.e., a first to a third, ports ①, ② and ③ and a plurality of fiber grating B1 to Bn connected in cascade. The fiber gratings B1 to Bn selectively reflect light of wavelengths λ1 to λn. The reflected light from the fiber gratings B1 to Bn is led to be incident on the first port① of the optical circulator A and emitted from the third port③ thereof.

Japanese Patent Disclosure No. 7-22650 shows an optical amplifier, which uses an optical circulator and selective wavelength reflecting means and is suited for the WDMOC. Fig. 9 shows this optical amplifier. The illustrated optical amplifier comprises an optical circulator A having three, i.e., a first to a third, ports ①, ② and ③ , an optical amplification fiber C connected to the second port ② of the optical ciculator A and excited by exciting light from an exciting light source (not shown), and selective wavelength reflecting means D inserted in the fiber C at an intermediate position thereof in the longitudinal direction and reflecting signal light. The optical amplification fiber C amplifies light from a optical signal input port E. The selective wavelength reflecting means D selectively reflects the amplified light. The amplified light is outputted form an optical signal output port F. In this case, the optical signal amplified by the optical amplification fiber C has gain deviations with different wavelengths. Accordingly, the reflecting means D is provided distributedly along the optical amplification fiber C at such distances as to be able to cancel the gain deviations of the amplified light and thus make uniform the gain of light provided as the optical signal from the optical signal output port F.

Among the disclosed techniques proposed for canceling the level deviations of the wavelength-multiplexed optical signal from the optical amplifier, the one shown in the US patent 5,260,823, which is designed to reduce the gain peak in the neighborhood of 1,530 nm as a featuring gain peak in the EDOFA, can hardly effect accurate level control for optical signal of the individual wavelengths. Also, in the WDM system using a plurality of optical amplifiers connected as multiple-stage relay for long distance transmission, the final output may contain level deviations.

With the optical amplifier shown in Fig. 9, it is possible to make the final output level uniform with the optical signal propagation distances in the optical amplification fiber C varied by varying the positions of the fiber ratings B1 to Bn in the optical amplification fiber C. However, the provision of a plurality of fiber gratings B1 to Bn in the optical amplification fiber C, forms a structure having a plurality of reflection points in the optical amplification fiber. Therefore, the noise characteristics may be deteriorated by the multiplex reflection of the optical signal.

Moreover, in order to eliminate the inter-wavelength level deviations in the optical signal by inserting a compensation filter (i.e. wavelength selective filter) for flattening the gain spectrum in the amplifier, such as EDOFA, it is necessary to appropriately set the optical characteristics (such as reflection and transmission characteristics) of the wavelength selective filter. Doing so requires length adjustment of the optical amplification fiber and replacement of the optical amplification fiber, fiber gratings and other component. This means great time and labor for making various settings in the manufacture of the optical amplifier and also the maintenance and various settings and changes after the manufacture.

SUMMARY OF THE INVENTION

An object of the present invention is to provide an optical amplifier, which permits readily control for making up for the wavelength dependency of an optical fiber amplifier, such as the EDOFA, to eliminate the gain or output light level deviations dependent on the wavelength and obtain an output flee from gain deviations.

A feature of the invention, as set forth in claim 1, is an optical amplifier having an optical amplification fiber for providing, when excited by exciting light, an optical amplification function, caused by stimulated emission, of optically amplifying optical signal inputted to an optical signal input port, the amplified signal being outputted from an optical signal output port, the optical amplifier comprising an optical circulator inserted between the optical signal input and output ports and having at least three ports such that light inputted to a first port is outputted from a second and that light inputted to the second port is outputted from the third port, and a reflecting means connected to the second port of the optical circulator for reflecting back light outputted therefrom, two or more different wavelength components of the optical signal from the optical signal input port being selectively reflected by the reflecting means and outputted from the optical signal output port, the reflecting means having such reflection characteristics as to reduce the optical level differences among the two or more outputted optical signal components.

Another feature of the invention, as set forth in claim 2, is that the optical circulator with the reflecting means connected thereto is inserted before or after or at an intermediate position in the optical amplification fiber.

A further feature of the invention, as set forth in claim 3, is the optical amplifier as set forth in claim 1, in which the optical circulator and the reflecting means are detachably connected to each other by an optical connector.

A still further feature of the invention, as set forth in claim 4, is the optical amplifier as set forth in claim 2, in which the optical circulator and the reflecting means are detachably connected to each other by an optical connector.

A yet further feature of the invention, as set forth in claim 5, is the optical amplifier as set forth in claim 1, which further comprises a switching mean connected to the second port of the optical circulator and having at least one input port and two or more output ports, light inputted to the input port being switchedly led to a desired one of the two or more output ports, and reflecting means individually connected to the respective output ports of the switching means and reflecting signal light inputted to the optical signal input port, the individual reflecting means having different optical characteristics, predetermined optical signal components being reflected by the individual reflecting means and outputted from the optical signal output port, the reflecting means having such reflection characteristics and to reduce the optical level differences among the two or more outputted optical signal components.

A further feature of the invention, as set forth in claim 6, is the optical amplifier as set forth in claim 2, which further comprises a switching means connected to the second port of the optical circulator and having at least one input port and two or more output port, light inputted to the input port being switchedly led to a desired one of the two or more ports, and reflecting means individually connected to the respective output ports of the switching means and reflecting optical signal inputted to the optical signal input port, the individual reflecting means having different optical characteristics, predetermined optical signal components being reflected by the individual reflecting means ad outputted from the optical signal output port, the reflecting means having such reflection characteristics as to reduce the optical level differences among the two or more outputted optical signal components.

A further feature of the invention, as set forth in claim 7, is the optical amplifier as set forth in claim 5, which further comprises an optical signal monitor for monitoring optical signal inputted to the optical signal input port or optical signal propagating the optical signal input port and the optical signal output port to detect the wavelength arrangement, light levels of the individual wavelengths and so forth of the monitored optical signal, and a switching control means for controlling the switching of the output ports of the switching means according to the data of the optical signal detected by the optical signal monitor.

A further feature of the invention, as set forth in claim 8, is the optical amplifier as set forth in claim 6, which further comprises an optical signal monitor for monitoring optical signal inputted to the optical signal input port or optical signal propagating between the optical signal input port and the optical signal output port to detect the wavelength arrangement, light levels of the individual wavelengths and so forth of the monitored optical signal, and a switching control means for controlling the switching of the output ports of the switching means according to the data of the optical signal detected by the optical signal monitor.

As further feature of the invention, as set forth in claim 9, is the optical amplifier as set forth in claim 5, in which the optical circulator and the switching means are detachably connected to each other by an optical connector.

A further feature of the invention, as set forth in claim 10, the optical circulator as set forth in claim 6, in which the optical circulator and the switching means are detachably connected to each other by an optical connector.

As further feature of the invention, as set forth in claim 11, the optical amplifier as set forth in claim 7, in which the optical circulator and the switching means are connected to each other by an optical connector.

A further feature of the invention, as set forth in claim 12, is the optical amplifier as set forth in claim 8, in which the optical circulator and the switching means are connected to each other by an optical connector.

A further feature of the invention, as set forth in 13, is the optical amplifier as set forth in claim 5, in which at least one of the reflecting means connected to the input ports of the switching means has a selectable reflectance wavelength combination different from those of the other reflecting means.

A further feature of the invention, as set forth in claim 14, is the optical amplifier as set forth in claim 6, in which at least one of the reflecting means connected to the input port of the switching means has a selectable reflection wavelength combination different from those of the other reflecting means.

A further feature of the invention, as set forth in claim 15, is the optical amplifier as set forth in claim 7, in which at least one of the reflection means connected to the input ports of the switching means has a selectable reflecting wavelength combination different from those of the other reflecting means.

A further feature of the invention, as set forth in claim 16, the optical amplifier as set forth in claim 8, in which at least one of the reflecting means connected to the input ports of the switching means has a selectable reflection wavelength combination different form those of the other reflecting means.

A further feature of the invention, as set forth in claim 17, is the optical amplifier as set forth in claim 9, in which at least one of the reflecting means connected to the input ports of the switching means has a selectable reflection wavelegth combination different from those of the other reflecting means.

A further feature of the invention, as set forth in claim 18, is the optical amplifier as set forth in claim 10, in which at least one of the reflecting means connected to the input ports of the switching means has a selectable reflection wavelength combination different from those of the other reflecting means.

A further feature of the invention, as set forth in claim 19, is the optical amplifier as set forth in claim 11, in which at least one of the reflecting means connected to the input ports of the switching means has a selectable reflection wavelength combination different from those of the other reflecting means.

A further feature of the invention, as set forth in claim 20, is the optical amplifier as set forth in claim 12, in which at least one of the reflecting means connected to the input port of the switching means has a selectable reflection wavelength combination different from those of the other reflecting means.

A further feature of the invention, as set forth in claim 21, is the optical amplifier according to one of claims 1 to 20, in which the reflecting means includes a fiber grating.

BRIEF DESCRIPTION OF THE DRAWINGS

Fig. 1 is a schematic view showing a first embodiment of the optical amplifier according to the invention;

Fig. 2 is a schematic view showing a second embodiment of the optical amplifier according to the invention;

Fig. 3 is a schematic view showing a third embodiment of the optical amplifier according to the invention;

Fig 4 is a schematic view showing a fourth embodiment of the optical amplifier according to the invention;

Fig. 5 is a schematic view showing a fifth embodiment of the optical amplifier according to the invention;

Fig. 6 is a schematic view showing a sixth embodiment of the optical amplifier according to the invention;

Fig. 7 is a diagram showing an example of fiber grating characteristics;

Fig. 8 is a schematic view showing a prior art wavelength selecting filter using an optical circulator;

and

Fig. 9 is a schematic view showing an optical amplifier used for prior art wavelength multiplexed communication.

DETAILED DESCRIPTION OF THE PREFERRED EMBODIMENTS

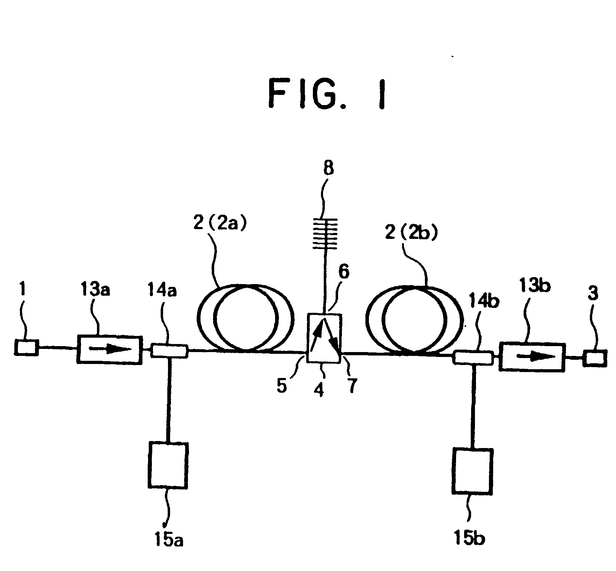

Fig. 1 shows a first embodiment of the optical amplifier according to the invention. The illustrated optical amplifier (EDOFA) comprises an optical signal input port 1, optical isolators 13a and 13b, wavelength multiplexers 14a and 14b, exciting light sources 15a and 15b, erbium dope optical fibers (i.e., optical amplification fibers) 2 (2a, 2b), an optical circulator 4 having three ports 5 to 7, a fiber grating (i.e., reflecting means) 8, and optical signal output port 3. When the exciting light sources 15a and 15b are driven for injecting exciting light therefrom into the erbium dope optical fibers 2a and 2b, the optical fibers 2a and 2b are imparted with an optical amplification function, and thus optically amplify wavelength-multiplexed optical signal, which is inputted to the optical signal input port 1 and outputted alter the optical amplification from the optical signal output port 3. The wavelength multiplexed optical signal inputted to the optical signal input port 1, is obtained by multiplexing a plurality of optical signal components of different wavelengths λ n (n being 1,2,...), and the optically amplified optical signal components are outputted as wavelength multiplexed optical signal from the optical signal output port 3. Where the optical amplification fibers used are erbium dope optical fibers, the bandwidth coverage of the wavelength-multiplexed optical signal is within the bandwidth of the optical fibers, i.e, 1.53 to 1.61 μm, and may be obtained by multiplexing, for instance, components of wavelengths of 1.5485, 1.5501, 1.5517 and 1.5533 μm. The wavelength of two exciting lights outputted from the exciting light sources 15a and 15b is usually 0.98 or 1.48 μm.

The optical circulator 4 which is inserted between the erbium dope optical fibers 2a and 2b, outputs light, which is propagated through the erbium dope optical fiber 2a and inputted to the first port 5, from the second port 6, and also light, which is inputted to the same second port 6, from the third port 7 for propagation to the erbium dope optical fiber 2b. The fiber grating 8 reflects light outputted from the second port 6 back to the same The fiber grating 8 thus reflects light propagated from the erbium dope optical fiber 2a, so that the reflected light can be propagated to the erbium dope optical fiber 2b.

The fiber grating 8 can selectively reflect light of two or more desired wavelengths, and can also set a desired reflectance Rn for each wavelength. That is, the fiber grating 8 can cause selective propagation of light of desired wavelengths, having been propagated from the erbium dope optical fiber 2a, to the erbium dope optical fiber 2b, and can independently control the level of light of each wavelength propagated to the erbium dope optical fiber 2b. Light of a particular wavelength means an optical signal relayed by the present optical amplifier, and reflectance Rn is the reflectance of optical signal of each wavelength to be relayed. According to the invention, the desired reflectance Rn is set such as to cancel light level deviations at the optical signal output port 3. An example of the method of setting the reflectance Rn will now be described.

Denoting the light level of each channel (i.e., optical signal of wavelength λ n) inputted to the optical signal input port 1 by Pn (dB), the gain received by the two erbium dope optical fibers 2a and 2b by Gn (dB), the light loss in the optical amplifier by ln (dB) and the level of light outputted from the optical signal output port 3 by P'n (dBm), these levels are related as

$$P'n = Pn + Gn + Rn - ln.$$

Thus, by setting Rn to be

Rn=-Pn-Gn+P'm+ln (n being an optional number of [1,2,...1] and m being a selected number of [1,2,...1], by setting the number of whole channels to be 1),

we have

$$P'1=P'2=P'3=...=P'm.$$

Thus, an output free from inter-channel output level deviations can be obtained at the optical signal output port 3. It is possible that m represents any channel number. Preferably, however, m is selected such that the output from the output port 3 is minimum, i.e., P'n ≧ P'm (n being 1, 2, ...), in the stage before the cancellation of the output level deviations.

Fig. 2 shows a second embodiment of the optical amplifier according to the invention. In this embodiment, four fiber gratings 8 (8a to 8d) having different optical characteristics can be connected by an optical switching means 11 to the second port 6 of the optical circulator 4 of the optical amplifier shown in Fig. 1. The optical switching means 11 can readily switch the fiber gratings 8a to 8d connecting to the second port 6 of the optical circulator 4, and it has an input port (also serving as an output port) 9 connected to the second port 6 of the optical circulator 4 and four output ports (also serving as input ports) 10a to 10d on the another side. An operating switch (not shown) can optically connect the input port 9 and a desired one of the four output ports 10a to 10b to each other. The optical switching means 11 can output optical signal received from the second port 6 of the optical circulator 4 to a desired one of the output ports 10a to 10d, to which the fiber gratings 8a to 8d are connected, and can also output optical signal, which was outputted from that one of the output ports 10a to 10d and reflected by the corresponding one of the fiber gratings 8a to 8d, to the second port 6 of the optical circulator 4.

The fiber gratings 8a to 8d connected to the optical switching means 11 have different reflection characteristics, and optical signal inputted to the optical signal input port 1 is reflected by one of the fiber gratings 8a to 8d and outputted from the optical signal output port 3. Fig. 7 shows an example of the reflection characteristics of the fiber gratings 8a to 8d. As shown, the fiber grating 8a has a characteristic that its reflectance is high on the short wavelength side and low on the long wavelength side. The fiber grating 8d, on the other hand, has a characteristic that its reflectance is low on the short wavelength side and high on the long wavelength side. The fiber gratings 8b and 8c have intermediate reflection characteristics between the above two characteristics. These fiber gratings 8a to 8d are selected in dependence on the characteristics of the wavelength multiplexed input optical signal (such as the level of the input optical signal of each channel, the total light level, the wavelength arrangement and the number of channels). For example, the selection may be made on the basis of a predetermined reference according to the level of the wavelength-multiplexed input optical signal of each wavelength. Alternatively, the selection may be made on the basis of a predetermined reference according to changes in the combination of channel wavelengths of the wavelength multiplexed input optical signal. In the former case, it is possible to reduce level deviations by selecting the fiber grating 8d having the characteristic as shown in Fig. 7 when the light level is high on the short wavelength side and low on the long wavelength side. The number of the fiber gratings 8 and the number of the output ports 10 in the optical switching means 11 of this embodiment, are by no means limitative. In this embodiment, in which a plurality of fiber gratings 8 are provided, it is possible to change the amplifier characteristics without replacing any component.

To cope with changes in the channel wavelength combination or the wavelength arrangement, fiber gratings 8 having different selective reflection wavelength combinations may be connected to respective output ports 10 of the optical switching means 11. As an example, a fiber grating 8e corresponding to 8-channel optical signal may be provided in addition to the fiber gratings 8a to 8d as shown in Fig. 7. In this case, it is readily possible to increase the transmission capacity by increasing the number of channels from 4 to 8. As another example, where the fiber gratings 8a to 8d correspond to optical signal of four channels from 1.5484 to 1.5535 $\mu$m, it is readily possible to cope with channel wavelength combination changes by connecting, in addition to these fiber gratings 8a to 8d, separate fiber gratings corresponding to optical signal of four channels from 1.5533 to 1.5582 $\mu$m.

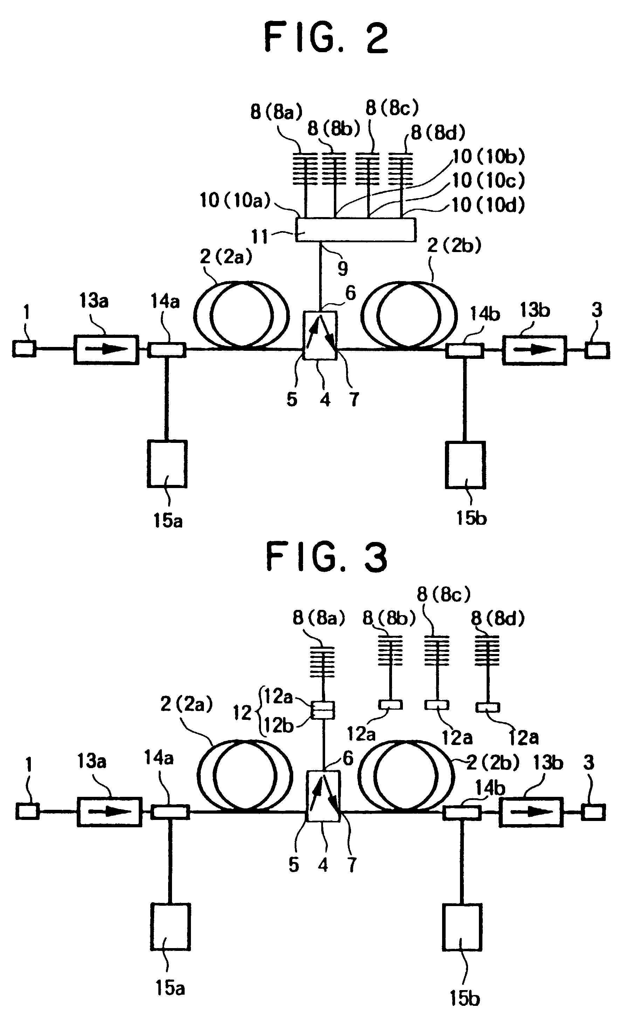

Fig. 3 shows a third embodiment of the optical amplifier according to the invention. In this embodiment, the fiber gratings 8 (8a to 8d) can be connected by an optical connector 12 to the second port 6 in the optical circulator 4 of the optical amplifier shown in Fig. 1. The optical connector 12 includes a female (or male) connector 12b connected to the second port 6 of the optical circulator 4 and male (or female) connector 12a connected to the fiber gratings 8a to 8d. Thus, the fiber gratings 8a to 8d which have different optical characteristics, can be readily detachably connected to the second port 6. The characteristic of one of the fiber gratings 8a to 8d which is to be connected, is selected according to the input signal characteristic. For example, the selection may be made in dependence on the light level of the input signal of each channel or the channel wavelength combination of the wavelength multiplexed input signal. In this embodiment, the amplifier characteristics can be readily changed by merely replacing the fiber gratings 8a to 8d.

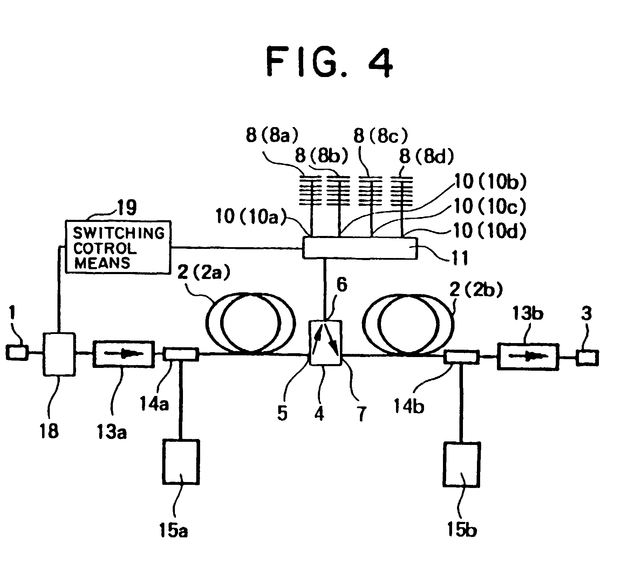

Fig.4 shows a fourth embodiment of the optical amplifier according to the invention. In this embodiment, an optical signal monitor 18 for monitoring optical signal is inserted after the optical signal input port 1 in the optical amplifier shown in Fig. 2, and a switching control means 19 is provided between the optical signal monitor 18 and the optical switching means 11. The optical signal monitor 18 produces branched light from the optical signal inputted to the optical signal input port 1, monitors the branched light with a light-receiving device of the like to detect the level of the wavelength-multiplexed optical signal of each channel, the total light level, the wavelength arrangement, the number of channels and so forth, and outputs the results of detection as data signal to the switching control means 19. The switching control means 19 compares the data of the data signal received form the optical signal monitor 18 with data base or the like, which specifies characteristics of the four fiber gratings 8a to 8b connected to the switching means 11, and thus determines one of the fiber gratings 8a to 8d which is suited to the input optical signal. As a result of this determination, the switching control means 19 controls the switching of the optical switching means 11 such that the suited one of the fiber gratings 8a to 8d is selected. The monitor 18 may be provided at any position between the optical signal input and output ports 1 and 3.

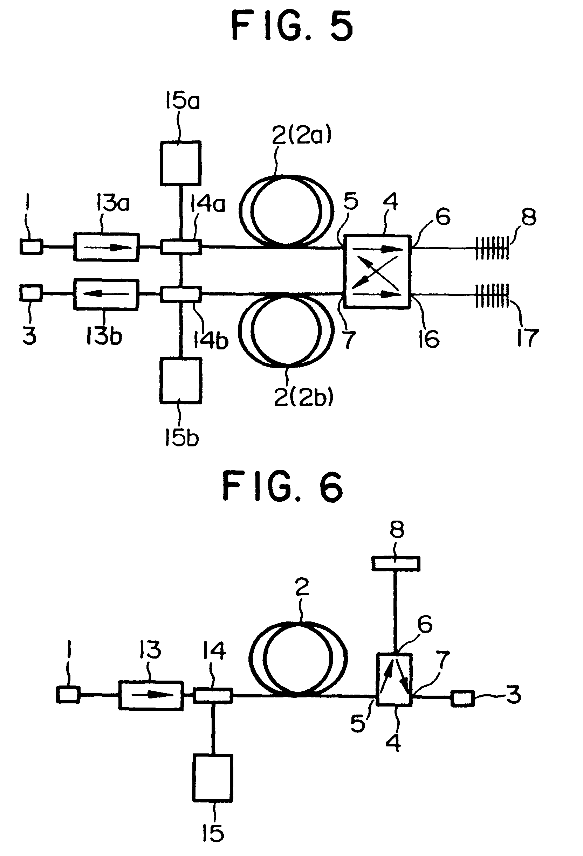

Fig. 5 shows a fifth embodiment of the optical amplifier according to the invention. In this embodiment, a four-port optical circulator 4 is inserted between the erbium dope optical fibers 2a and 2b. The optical circulator 4 can output light, which was propagated through the erbium dope optical fiber 2a and inputted to its first port 5, from its second port 6, and also output light inputted thereto from its third port 7 for propagation to the erbium dope optical fiber 2b. Also, the optical circulator 4 can output light, which was propagated through the erbium dope optical fiber 2b to the third port 7, from its fourth port 16, and also output light inputted thereto from the first port 5 for propagation to the erbium dope optical fiber 2a. Like the above embodiments, this embodiment has fiber gratings 8 selectively reflecting wavelength-multiplexed optical signal of the respective wavelengths, and also it has additional fiber gratings 17 for selectively reflecting exciting light, which is propagated from an exciting light source 15b to the erbium dope optical fiber 2b. In this embodiment, the exciting light from the exciting light source 15 is also propagated through the fiber gratings 17, connected to the optical circulator 4, to the erbium dope optical fiber 2a to excite the same.

Fig. 6 shows a sixth embodiment of the optical amplifier according to the invention. In this embodiment, exciting light from the exciting light source 15 is inputted form the optical signal input side of the erbium dope optical fiber 2 for fore-excitation thereof, and the optical circulator 4 is provided at the trailing end of the erbium dope optical fiber 2. The output terminal of the erbium dope optical fiber 2 is connected to the first port 5 of the optical circulator 4, and the optical signal output port 3 is connected to the third port 7 of the optical circulator 4. The reflecting means 8 reflects back the wavelength-multiplexed optical signal, which is inputted to the first port 5 and outputted to the second port 6 of the optical circulator 4. The optical circulator 4 outputs the reflected light from the third port 7 to the optical signal output port 3.

While some preferred embodiments of the optical amplifier according to the invention have been described, the following modifications are also possible.

1. The optical connector 12 shown in Fig. 3 may be used in lieu of the optical switching means 11 shown in Fig. 2. In other words, the optical switching means may be adapted to be detachably connected to the second port 6 of the optical circulator 4. In this case, the fiber gratings 8 may be replaced together with the optical switching means 11.

2. The fiber gratings 8 to be connected to the second port 6 of the optical circulator 4, may be provided with various desired characteristics; they may have desired wavelengths and reflectances in dependence on the wavelengths of the optical signal, the number of optical signal wavelengths to be multiplexed and amplifier characteristics.

Effect of the invention

The optical amplifier according to the invention, as set forth in claim 1 or 2, emits amplification of a wavelength-multiplexed signal free from gain or output light level deviations by making up for the wavelength dependency of the signal.

The optical amplifier according to the invention, as set forth in claim 3 or 4, permits readily mounting and dismounting of the reflecting means 8. Thus, even when applied to a system in which inter-channel light level deviations are subject to changes, the invention permits stable communication free from light level deviations to be obtained by replacing the reflecting means 8 whenever the system is used.

The optical amplifier according to the invention, as set forth in claim 5 or 6, a plurality of reflecting means 8 having necessary characteristics may be mounted beforehand such that they can be switched by the switching means 11. Thus, even when applied to a system in which inter-channel light level deviations are subject to changes, the invention permits stable communication free from light level deviations to be obtained by replacing the reflecting means 8 whenever the system is used.

The optical amplifier according to the invention, as set forth in claim 7 or 8, a proper reflecting means 8 can he selected automatically according to the characteristics of the input optical signals. The invention thus permits automatic operation of even a system, in which the characteristics of the input optical signal are subject to changes.

The optical amplifier according to the invention, as set forth in any of claims 9 to 12, the switching means 11 can be readily mounted and dismounted. Thus, even when applied to a system, in which inter-channel light level deviations are subject to changes, the invention permits stable communication free from light level deviations to be obtained by switching or replacing the reflecting means 8 whenever the system is used.

The optical amplifier according to the invention as set forth in any of the claims 13 to 20, at least one of the reflecting means 8 connected to the respective ports 10 of the switching means, has a selective reflection wavelength combination different from the selective reflection wavelength combination of the other reflecting means. The invention thus permits coupling with communication channel changes.

The optical amplifier according to the invention, as set forth in claim 21, which uses fiber grating as the reflecting means 8, has high degree of freedom of design concerning the reflecting wavelength and reflectance of the reflecting means 8, and thus permits readily manufacture of what are suited for various systems.

Claims

1. An optical amplifier having an optical amplification fiber (2) for providing, when excited by exciting light, an optical amplification function, caused by stimulated emission, of optically amplifying optical signal inputted to an optical signal input port (1), the amplified signal being outputted from an optical signal output port (3), the optical amplifier comprising an optical circulator (4) inserted between the optical signal input and output ports (1 and 3) and having at least three ports such that light inputted to a first port (5) is outputted from a second port (6) and that light inputted to the second port (6) is outputted from a third port (7), and a reflecting means (8) connected to the second port (6) of the optical circulator (4) for reflecting back light outputted therefrom, two or more different wavelength components of the optical signal from the optical signal input port (1) being selectively reflected by the reflecting means (8) and outputted from the optical signal output port (3), the reflecting means (8) having such reflection characteristics as to reduce the optical level differences among the two or more outputted optical signal components.

2. The optical amplifier according to claim 1, wherein the optical circulator (4) with the reflecting means (8) connected thereto is inserted before or after or at an intermediate position in the optical amplification fiber (4).

3. The optical amplifier according to claim 1, wherein the optical circulator (4) and the reflecting means (8) are detachably connected to each other by an optical connector (12).

4. The optical amplifier according to claim 2, wherein the optical circulator (4) and the reflecting means (8) are detachably connected to each other by an optical connector (12).

5. The optical amplifier according to claim 1, which further comprises a switching means (11) connected to the second port (6) of the optical circulator (4) and having at least one input port (9) and two or more output ports (10), light inputted to the input port (9) being switchedly led to a desired one of the two or more output ports (10), and reflecting means (8) individually connected to the respective output ports (10) of the switching means (11) and relfecting optical signal inputted to the optical signal input port (1), the individual reflecting means (8) having different optical characteristics, predetermined optical signal components being reflected by the individual reflecting means (8) and outputted from the optical signal output port (3), the reflecting means (8) having such reflection characteristics as to reduce the optical level differences among the two or more outputted optical signal components.

6. The optical amplifier according to claim 2, which further comprises a switching means (11) connected to the second port (6) of the optical circulator (4) and having at least one input port (9) and two or more output ports (10), light inputted to the input port (9) being switchedly led to a desired one of the two or more output ports (10), and reflecting means (8) individually connected to the respective output ports (1)) of the switching means (11) and reflecting optical signal inputted to the optical signal input port (1), the individual reflecting means (11) having different optical characteristic, predetermined optical signal components being reflected by the individual reflecting means (8) and outputted from the optical signal output port (3), the reflecting means (8) having such reflection characteristics as to reduce the optical level differences among the two or more outputted optical signal components.

7. The optical amplifier according to claim 5, which further comprises an optical signal monitor (18) for monitoring optical signal inputted to the optical signal input port (1) or optical signal propagating between the optical signal input port (1) and the optical signal output port (3) to detect the wavelength arrangement, light levels of the individual wavelengths and so forth of the monitored optical signal, and a switching control means (19) for controlling the switching of the output ports (10) of the switching means (11) according to the data of the optical signal detected by the optical signal monitor (18).

8. The optical amplifier according to claim 6, which further comprises an optical signal monitor (18) for monitoring optical signal inputted to the optical signal input port (1) or optical signal propagating between the optical signal input port (1) and the optical signal output port (3) to detect the wavelength arrangement, light levels of the individual wavelengths and so forth of the monitored optical signal, and a switching control means (19) for controlling the switching of the output ports (10) of the switching means (11) according to the data of the optical signal detected by the optical signal monitor (18).

9. The optical amplifier according to claim 5, wherein the optical circulator (4) and the switching means (11) are detachably connected to each other by a optical connector (12).

10. The optical amplifier according to claim 6, wherein the optical circulator (4) and the switching means (11) are detachably connected to each other by an optical connector (12).

11. The optical amplifier according to claim 7, wherein the optical circulator (4) and the switching means (11) are connected to each other by a optical connector (12).

12. The optical amplifier according to claim 8, wherein the optical circulator (4) and the switching means (11) are connected to each other by a optical connector (12).

13. The optical amplifier according to claim 5, wherein at least one of the reflecting means (8) connected to the respective output ports (10) of the switching means (11) has a selectable reflection wavelength combination different form those of the other reflecting means.

14. The optical amplifier according to claim 6, wherein at least one of the reflecting means (8) connected to the respective output ports (10) of the switching means (11) has a selectable reflection wavelength combination different from those of the other reflecting means.

15. The optical amplifier according to claim 7, wherein at least one of the reflecting means (8) connected to the respective output ports (10) of the switching means (11) has a selectable reflection wavelength combination different from those of the other reflecting means.

16. The optical amplifier according to claim 8, wherein at least one of the reflecting means (8) connected to the respective output ports (10) of the switching means (11) has a selectable refletion wavelength combination different form those of the other reflecting means.

17. The optical amplifier according to claim 9, wherein at least one of the reflecting means (8) connected to the respective output ports (10) of the switching means (11) has a selectable reflection wavelength combination different form those of the other reflecting means.

18. The optical amplifier according to claim 10, wherein at least one of the reflecting means (8) connected to the respective output ports (10) of the switching means (11) has a seletable reflection wavelength combination different from those of the other reflecting means.

19. The optical amplifier according to claim 11, wherein at least one of the reflecting means (8) connected to the respective output ports (10) of the switching means (11) has a selectable reflection wavelength combination different from those of the other reflecting means.

20. The optical amplifier according to claim 12, wherein at least one of the reflecting means (8) connected to the respective output ports (10) of the switching means (11) has a selectable reflection wavelength combination different form those of the other reflecting means.

21. The optical amplifier according to one of claims 1 to 20, wherein the reflecting means (8) includes a fiber grating.

# FIG. 1

# FIG. 2

# FIG. 3

# FIG. 4

# FIG. 5

# FIG. 6

# FIG. 8

$\lambda 1$  $\lambda 2$  $\lambda n$

① A

②

③ B1  B2  Bn

# FIG. 9

E

$\lambda 1$、$\lambda 2$ ・・・・ $\lambda n$

① A

② C

③ D

F

# FIG. 7

## INTERNATIONAL SEARCH REPORT

| International application No. |
| --- |
| PCT/JP98/01488 |

**A. CLASSIFICATION OF SUBJECT MATTER**
Int.Cl⁶ H01S3/10, H04B9/00

According to International Patent Classification (IPC) or to both national classification and IPC

**B. FIELDS SEARCHED**

Minimum documentation searched (classification system followed by classification symbols)
Int.Cl⁶ H01S3/10, H04B9/00, G02F1/35, G02B6/12

Documentation searched other than minimum documentation to the extent that such documents are included in the fields searched

| | | | |
| --- | --- | --- | --- |
| Jitsuyo Shinan Koho | 1922-1996 | Toroku Jitsuyo Shinan Koho | 1994-1998 |
| Kokai Jitsuyo Shinan Koho | 1971-1998 | Jitsuyo Shinan Toroku Koho | 1996-1998 |

Electronic data base consulted during the international search (name of data base and, where practicable, search terms used)
JICST File on Science and Technology (JOIS)

**C. DOCUMENTS CONSIDERED TO BE RELEVANT**

| Category* | Citation of document, with indication, where appropriate, of the relevant passages | Relevant to claim No. |
| --- | --- | --- |
| Y<br>A | JP, 8-213676, A (Oki Electric Industry Co., Ltd.),<br>August 20, 1996 (20. 08. 96),<br>Full text ; Figs. 1 to 14<br>Full text ; Figs. 1 to 14<br>& EP, 713273, A | 1-4, 21<br>5-20 |
| Y<br>A | JP, 8-54580, A (The Furukawa Electric Co., Ltd.),<br>February 27, 1996 (27. 02. 96),<br>Full text ; Figs. 1 to 9<br>Full text ; Figs. 1 to 9 (Family: none) | 1-4, 21<br>5-20 |
| Y<br>A | JP, 7-336327, A (Nippon Telegraph & Telephone Corp.),<br>December 22, 1995 (22. 12. 95),<br>Full text ; Figs. 1 to 11<br>Full text ; Figs. 1 to 11 (Family: none) | 1-4, 21<br>5-20 |

| ☒ Further documents are listed in the continuation of Box C. | ☐ See patent family annex. |
| --- | --- |

| | | |
| --- | --- | --- |
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "E" | earlier document but published on or after the international filing date | "X" document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | |
| "O" | document referring to an oral disclosure, use, exhibition or other means | "Y" document of particular relevance; the claimed invention cannot be considered to involve an inventive step when the document is combined with one or more other such documents, such combination being obvious to a person skilled in the art |
| "P" | document published prior to the international filing date but later than the priority date claimed | "&" document member of the same patent family |

| Date of the actual completion of the international search | Date of mailing of the international search report |
| --- | --- |
| June 23, 1998 (23. 06. 98) | June 30, 1998 (30. 06. 98) |

| Name and mailing address of the ISA/<br>    Japanese Patent Office | Authorized officer |
| --- | --- |
| Facsimile No. | Telephone No. |

Form PCT/ISA/210 (second sheet) (July 1992)

INTERNATIONAL SEARCH REPORT

International application No.

PCT/JP98/01488

C (Continuation). DOCUMENTS CONSIDERED TO BE RELEVANT

| Category* | Citation of document, with indication, where appropriate, of the relevant passages | Relevant to claim No. |
|---|---|---|
| Y<br>A | JP, 63-241514, A (The Furukawa Electric Co., Ltd.),<br>October 6, 1988 (06. 10. 88),<br>Full text ; Figs. 1 to 8<br>Full text ; Figs. 1 to 8 (Family: none) | 3-4<br>9-12 |
| A | JP, 3-206427, A (Nippon Telegraph & Telephone<br>Corp.),<br>September 9, 1991 (09. 09. 91),<br>Full text ; Figs. 1 to 4 (Family: none) | 1-21 |

Form PCT/ISA/210 (continuation of second sheet) (July 1992)